# EUROPÄISCHE PATENTSCHRIFT

(11) **EP 2 952 390 B1**
(45) Veröffentlichungstag und Bekanntmachung des Hinweises auf die Patenterteilung: **14.06.2017**
(21) Anmeldenummer: 15163004.3
(22) Anmeldetag: 09.04.2015
(51) Int. Cl.: B60R 16/023, A42B 3/04

(54) **VORRICHTUNG ZUR AUSLÖSUNG EINER FUNKTION EINES PERIPHERIEGERÄTES EINES FORTBEWEGUNGSMITTELS**
DEVICE FOR ACTUATING A FUNCTION OF A PERIPHERAL DEVICE OF A MEANS OF TRANSPORT
DISPOSITIF DE DÉCLENCHEMENT D'UNE FONCTION D'UN APPAREIL PÉRIPHÉRIQUE D'UN MOYEN DE DÉPLACEMENT

(30) Priorität: 05.06.2014 DE 102014210729
(43) Veröffentlichungstag der Anmeldung: 09.12.2015
(73) Patentinhaber: ROBERT BOSCH GMBH, 70442 Stuttgart (DE)
(72) Erfinder: Kraus, Viktor, 72770 Reutlingen (DE); Frank, Holger, 72793 Pfullingen (DE)

(56) Entgegenhaltungen:
- WO-A1-2004/068212
- WO-A1-2006/127940
- JP-A- 2008 226 075
- US-A1- 2006 072 007
- US-A1- 2012 306 642
- US-A1- 2013 128 046
- US-A1- 2013 311 075

## Beschreibung

### Stand der Technik

Die vorliegende Erfindung betrifft eine Vorrichtung zur Auslösung einer Funktion eines Peripheriegerätes eines Fortbewegungsmittels.

Beim Betrieb von Fortbewegungsmitteln sollen in Abhängigkeit der Fahrsituation häufig Funktionen aktiviert oder verändert werden, welche nicht direkt durch das Fortbewegungsmittel selbst bereitgestellt werden. Beispiele hierfür sind Helmkameras (auch "Action-Cam" genannt), Musikwiedergabegerät o.ä. Im Falle einer Action-Cam sollen beispielsweise besonders rasante Fahrten aufgezeichnet werden. Hierzu hat der Anwender in einem Moment der Ruhe die Action-Cam zu aktivieren und die Aufnahme zu starten. Bis zum Erreichen der aufzeichnungswerten Fahrmomente verstreichen mitunter mehrere Sekunden oder Minuten, sodass eine aufwendige Nachbearbeitung des aufgezeichneten Materials erforderlich ist. Eine Betätigung der mitunter filigran ausgeführten Bedieneinrichtungen der Action-Cam während der rasanten Fahrt kommt aus sicherheitstechnischen und ergonomischen Gründen indes nicht in Frage. Mitunter behindert seine Schutzausrüstung (z.B. Handschuhe) den Fahrer zusätzlich. Ein anderer Anwendungsfall betrifft die Musikwiedergabe. Während es im automobilen Bereich eine geschwindigkeitsabhängige Anhebung der Musikwiedergabelautstärke für integrierte Infotainmentsysteme seit Längerem gibt, ist eine entsprechende Funktion für Peripheriegeräte (MP3-Player etc.) nicht bekannt. Überdies ist eine geschwindigkeitsabhängige Lautstärkeanhebung für Zweiräder und/oder abseits befestigter Straßen befahrbare Fortbewegungsmittel ebenfalls nicht bekannt.

Aus der JP 2008226075 A ist eine Erfassungseinrichtung für einen Betriebszustand eines Zweirades bekannt.

Es ist daher eine Aufgabe der vorliegenden Erfindung, eine Auslösung einer Funktion eines Peripheriegerätes eines Fortbewegungsmittels komfortabel und sicher zu gestalten.

### Offenbarung der Erfindung

Die vorstehend genannte Aufgabe wird erfindungsgemäß durch eine Vorrichtung nach Anspruch 1 gelöst, bei der Betriebsgrößen eines Fortbewegungsmittels erfasst werden und betriebsgrößenabhängig eine Aktivierung bzw. Auslösung einer Funktion eines Peripheriegerätes vorgenommen wird. Das Peripheriegerät kann dabei an dem Fortbewegungsmittel oder an einem Benutzer/Anwender des Fortbewegungsmittels angebracht sein. Das Fortbewegungsmittel kann beispielsweise ein abseits befestigter Straßen ("Offroad") fahrbares Fortbewegungsmittel sein. Insbesondere Zweiräder (optional zumindest teilweise elektrisch antreibbar) wie z. B. Rennräder, Mountainbikes, jedoch auch Trikes, Quads und andere Fortbewegungsmittel können erfindungsgemäß ausgestaltet werden. Das Peripheriegerät kann beispielsweise eine Kamera sein, welche an einem Helm eines Anwenders oder am Fortbewegungsmittel selbst angeordnet ist. Das Peripheriegerät ist jedoch, wie der Name schon sagt, kein permanenter Bestandteil des Fortbewegungsmittels. Es kann insbesondere außerhalb des Auslieferungsumfangs des Fortbewegungsmittels (After Market Device) liegen. Im Falle der Helmkamera kann die erfindungsgemäß aktivierte bzw. ausgelöste Funktion beispielsweise eine Aufnahmefunktion sein. Die erfindungsgemäße Vorrichtung umfasst eine Erfassungseinheit für die Erfassung einer Betriebskenngröße des Fortbewegungsmittels. In abhängig eines Vergleichs dieser Betriebskenngröße mit einem Schwellenwert erfolgt eine automatische Auslösung der Funktion des Peripheriegerätes. Diese Erfassungseinheit kann die Betriebskenngröße drahtgebunden und/oder drahtlos empfangen. Weiter kann eine Auswerteeinheit vorgesehen sein, mittels welcher die Betriebskenngröße bewertet werden kann. Ein Vergleich einer aktuellen Betriebskenngröße mit einem beispielsweise werksseitig vordefinierten oder neu definierbaren Schwellenwert ist vorgesehen. Die Auswerteeinheit kann hier zu einen programmierbaren Prozessor (Mikrocontroller, Nanocontroller o. ä.) umfassen. Weiter ist eine Sendeeinheit, z.B. eine Drahtlossendeeinheit zum Aussenden eines Auslösesignals ("Trigger") an das Peripheriegerät vorgesehen. Die vorgenannte Auswerteeinheit kann in der Sendeeinheit integriert sein bzw. die Sendeeinheit kann deren Vergleichsaufgabe vollständig übernehmen. In Abhängigkeit des Vergleichs kann die Sendeeinheit ein Aktivierungssignal, z.B. einen Trigger an das Peripheriegerät senden. Im Ansprechen auf den Empfang des Triggers kann das Peripheriegerät eine vordefinierte Funktion starten. Auf diese Weise kann die vordefinierte Funktion betriebskenngrößenabhängig ausgelöst werden, sodass eine Bedienung durch den Anwender bei Eintreten des erfindungsgemäß vordefinierten Ereignisses nicht erforderlich ist. Auf diese Weise werden die Verkehrssicherheit und die Bedienergonomie erheblich erhöht. Erfindungsgemaß ist eine Schwellwerteinheit, z.B. ein Konfigurationseingang zum Definieren eines Schwellenwertes für die Betriebskenngröße vorgesehen Die Schwellwerteinheit wird somit verwendet um einen anwenderseitig vordefinierten Schwellenwert in die Vorrichtung zu speichern. Auch die Schwellwerteinheit kann eine Drahtlosschnittstelle und/oder eine drahtgebundene Schnittstelle (USB, Bluetooth, WLAN (Standard 802.11)) umfassen. Die Schwellwerteinheit ermöglicht eine nachträgliche Definition bzw. Anpassung des Schwellenwertes durch einen Anwender. Denkbar ist beispielsweise, dass die Schwellwerteinheit einen Speicher aufweist, aus dem situationsabhängige Schwellwerte ausgelesen werden können. Typische Schwellwerte können Minimal- oder Maximalwerte sowie Durchschnittswerte sein. Die Unteransprüche zeigen bevorzugte Weiterbildungen der Erfindung. Bevorzugt sind die vorgenannten Komponenten der erfindungsgemäßen Vorrichtung in einem gegen mechanische Stöße und das Eindringen von Fluiden schützenden Gehäuse untergebracht. Das Gehäuse kann auch die drahtgebundenen Schnittstellen zur Kommunikation beziehungsweise Konfiguration mittels fluiddichter Kappen und Abdeckungen (auch "Stöpsel") schützen. Zudem kann das Gehäuse eingerichtet sein, an einem zum Befahren unbefestigten Geländes vorgesehenen Fortbewegungsmittel befestigt zu werden. Über die Möglichkeit hinaus, die erfindungsgemäße Vorrichtung in einem Rucksack mit sich zu führen oder in einer Tasche (Hosentasche, Jackentasche) der Oberbekleidung unterzubringen, bietet sich auf diese Weise die Möglichkeit, die Vorrichtung z.B. am Rahmen des Fortbewegungsmittels anzuordnen. Hierzu kann das Gehäuse eine rohrschellenartige Struktur aufweisen und/oder per Klettbändern und entsprechende Laschen an einem Rahmenteil des Fortbewegungsmittels angebracht werden.

Die Erfassungseinheit kann eine zu satellitenbasierten Positionsbestimmung eingerichtete Ortungseinheit umfassen. Auf diese Weise kann beispielsweise eine Geschwindigkeit und/oder eine Beschleunigung und/oder eine Höhe über normal Null und/oder eine Höhenänderung als Betriebskenngröße verwendet werden. Alternativ oder zusätzlich kann ein Radumdrehungssensor vorgesehen sein, mittels welchem die Reisegeschwindigkeit und/oder Beschleunigung des Fortbewegungsmittels exakt und energieeffizient bestimmt werden kann. Der Radumdrehungssensor kann beispielsweise auf einen in einer Speiche eines Rades des Fortbewegungsmittels angeordneten magnetischen Geber reagieren. Alternativ oder zusätzlich kann ein Beschleunigungssensor in der Empfangseinheit enthalten sein, mittels welchem eine Geschwindigkeitsveränderung des Fortbewegungsmittels ebenso wie Schläge, Stöße oder Erschütterungen beim Überfahren unebener Oberflächen als Betriebskenngrößen ermittelt werden können. Alternativ oder zusätzlich kann ein Bus-Controller in der Empfangseinheit vorgesehen sein, mittels welchem die erfindungsgemäße Vorrichtung an einen Bus des Fortbewegungsmittels angeschlossen sein kann. Auf diese Weise können sämtliche auf dem Bus verfügbaren Betriebskenngrößen des Fortbewegungsmittels auch zum Auslösen der Funktion des Peripheriegerätes verwendet werden.

Die Schwellwerteinheit kann eine Kurzstreckenfunk-basierte Drahtlossendeempfangseinheit umfassen, welche beispielsweise Bluetooth-Signale eines Smartphones, eines Tablet-PCs, Infrarotsignale, WLAN-Signale o. ä. empfangen, insbesondere auch aussenden kann. Alternativ oder zusätzlich kann die Schwellwerteinheit einen USB-Eingang, einen Mini-USB-Eingang, einen Firewire-Eingang, oder einen Datenspeicher o. ä. umfassen. Auf diese Weise können Schwellenwerte bequem über ergonomische Anwenderschnittstellen definiert und in die erfindungsgemäße Vorrichtung gespeichert werden. Insbesondere können sogenannte "Apps" auf Smartphones/Tablet-PCs verwendet werden, um die erfindungsgemäße Vorrichtung zu konfigurieren. Dies ermöglicht eine Konfiguration ohne das Erfordernis spezieller Hardware und verringert die Kosten des Gesamtsystems.

Beispielsweise kann auch eine vordefinierte Zeitdauer in die Vorrichtung geschrieben werden, bis zu welcher eine Schwellenwertbetrachtung einer Betriebskenngröße nicht erfolgt. Nach dem Verstreichen der vordefinierten Zeitdauer startet die erfindungsgemäße Schwellenwertbetrachtung dann automatisch. Auch diese Zeitdauer kann über den Konfigurationseingang definiert werden. Auf diese Weise ist es möglich, Betriebszustände jenseits des Schwellenwertes nicht die Funktion des Peripheriegerätes auslösen zu lassen, bis nach Ablauf der Zeitdauer eine erstmalige Überschreitung die Funktion zu einem gewünschten Moment aktiviert. Alternativ kann auch vorgesehen sein, das Aktivierungssignal erst nach dem Ablauf einer Zeitdauer nach der Erkennung der Aktivierungsbedingung auszusenden, z.B. nach dem überschreiten des Schwellenwertes.

Gemäß einem zweiten Aspekt der vorliegenden Erfindung wird ein Fortbewegungsmittel vorgeschlagen, welches beispielsweise als Zweirad, als Quad, als Trike o. ä. ausgestaltet sein kann. Das Fortbewegungsmittel kann beispielsweise teilweise oder vollständig elektrisch antreibbar sein. Es umfasst eine Vorrichtung, wie sie in Verbindung mit dem erstgenannten Verbindungsaspekt im Detail beschrieben worden ist. Die Merkmale, Merkmalskombinationen und die sich aus diesen ergebenden Vorteile entsprechen den in Verbindung mit der erfindungsgemäßen Vorrichtung ausgeführten derart ersichtlich, dass zur Vermeidung von Wiederholungen auf die obigen Ausführungen verwiesen wird.

Gemäß einem dritten Aspekt der vorliegenden Erfindung wird ein System vorgeschlagen, welcher eine Bildaufzeichnungseinrichtung mit einer DrahtlosEmpfangseinheit zum Empfangen des Auslösesignals ausweist. Die Bildaufzeichnungseinrichtung kann beispielsweise für den Außeneinsatz, insbesondere in Form einer sogenannten "Action-Cam", eingerichtet sein. Zusätzlich umfasst das System eine Vorrichtung, wie sie in Verbindung mit dem erstgenannten Erfindungsaspekt im Detail beschrieben worden ist. Das System kann beispielsweise als Verkaufseinheit vorgesehen sein, wobei die Vorrichtung auf die Aufzeichnungseinrichtung abgestimmte und auf typische Anwendungsfälle bezogene Schwellenwerte in einem Datenspeicher umfasst. Insbesondere können die Bildaufzeichnungseinrichtung und die erfindungsgemäße Vorrichtung des Systems mechanisch in der Art ausgestaltet sein, dass ein einfaches reversibles Verbinden und Lösen ("Steckverbindung") eine gemeinsame Aufbewahrung begünstigt. Insbesondere kann beim reversiblen Verbinden auch eine elektrische Verbindung zwischen beiden Komponenten hergestellt werden, welche ein Laden mittels eines (beispielsweise externen) Ladegerätes gleichzeitig ermöglicht. Weiter bevorzugt kann hierbei auch eine Datenverbindung zwischen der Bildaufzeichnungseinrichtung und der erfindungsgemäßen Vorrichtung hergestellt werden, wodurch innerhalb der Bildaufzeichnungseinrichtung gespeichertes Datenmaterial über die erfindungsgemäße Vorrichtung (und gegebenenfalls eine Docking-Station) auf einen externen Datenspeicher kopiert werden kann.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Ansicht eines erfindungsgemäß ausgestalteten Fortbewegungsmittels;
- Figur 2: eine schematische Ansicht von Komponenten eines Ausführungsbeispiels einer erfindungsgemäßen Vorrichtung; und
- Figur 3: eine schematische Ansicht von Komponenten eines Ausführungsbeispiels eines erfindungsgemäßen Teilesatzes.

### Ausführungsformen der Erfindung

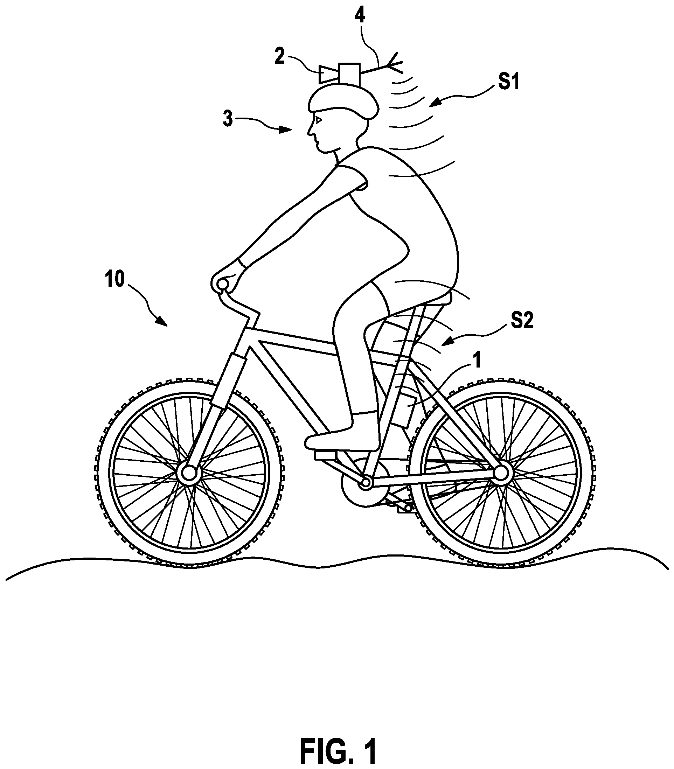

Figur 1 zeigt ein Mountainbike 10 als Fortbewegungsmittel, an dessen Rahmen ein Ausführungsbeispiel einer erfindungsgemäßen Vorrichtung 1 zur betriebskenngrößenabhängigen Aktivierung bzw. Auslösung einer Funktion einer Helmkamera 2 als Peripheriegerät vorgesehen ist. Die Helmkamera 2 weist eine Drahtlosempfangseinheit 4 auf, mittels welcher die Vorrichtung 1 und die Kamera 2 Drahtlossignale S1, S2 austauschen können. Hierbei überträgt das Signal S2 einen Trigger an die Helmkamera 2. Der Anwender 3 hat erfindungsgemäß keine Bedienschritte vorzunehmen, um beim Überschreiten einer in der Vorrichtung 1 vordefinierten Minimalgeschwindigkeit das Signal S2 erzeugen zu lassen und somit die Aufnahmefunktion in der Helmkamera 2 zu aktivieren.

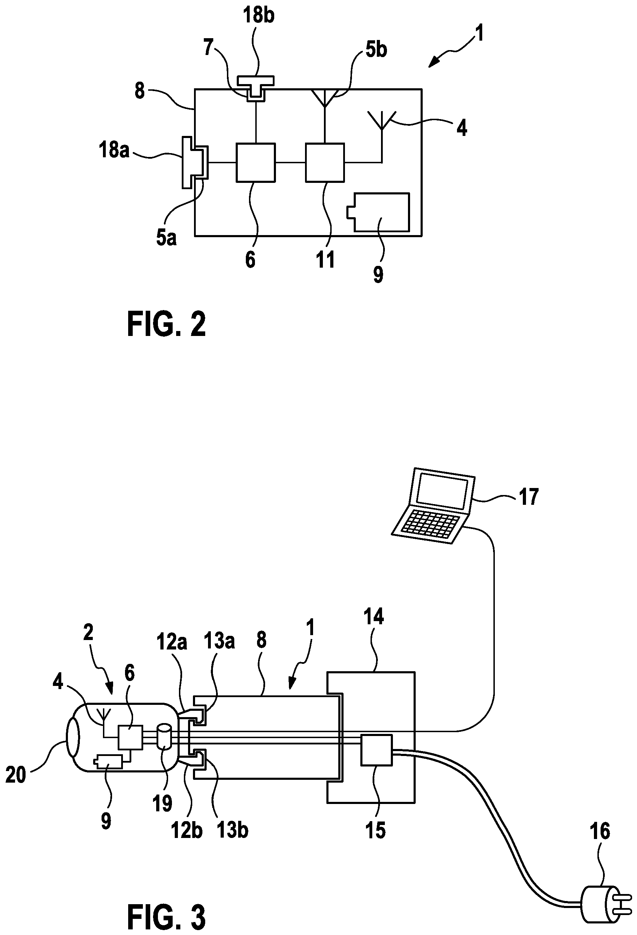

Figur 2 zeigt die Komponenten eines Ausführungsbeispiels einer erfindungsgemäßen Vorrichtung 1. Innerhalb eines wasserdicht und schlagfest ausgestalteten Gehäuses 8 sind ein Bus-Controller 7 als Erfassungseinheit und ein USB-Anschluss 5a als Konfigurationseingang vorgesehen. Beide sind zum Schutz gegen Fremdkörper- und Fluideintrag durch Gummistöpsel 18a, 18b geschützt. Ein programmierbarer Prozessor 6 als Auswerteeinheit ist informationstechnisch mit dem Bus-Controller 7 und dem USB-Anschluss 5a verbunden. Auch eine Kommunikationseinheit 11 aufweisend eine erste Antenne 5b eines Konfigurationseingangs und eine zweite Antenne 4 einer Drahtlossendeeinheit ist mit dem programmierbaren Prozessor 6 der Auswerteeinheit verbunden. Ein elektrochemischer Energiespeicher 9 ist eingerichtet, die Vorrichtung 1 temporär mobil mit elektrischer Energie zu versorgen.

Figur 3 zeigt ein System gemäß einem Ausführungsbeispiel einer erfindungsgemäßen Vorrichtung. Dieser umfasst eine Helmkamera ("Action-Cam") 2, welche eine Antenne 4 und eine mit dieser verbundene, einen programmierbaren Prozessor 6 umfassende Auswerteeinheit aufweist. Ein Datenspeicher 19 ist vorgesehen, die über das Objektiv 20 erhaltenen Bilder abzuspeichern und für einen Abruf (drahtgebunden oder drahtlos) bereitzuhalten. Auch die Action-Cam 2 weist einen elektrochemischen Energiespeicher 9 zur temporären mobilen Versorgung mit elektrischer Energie auf. An der Außenseite der Action-Cam 2 sind zwei Rasthaken 12a, 12b vorgesehen, welche eingerichtet sind, mit korrespondierenden Strukturen 13a, 13b eines Gehäuses 8 eines anderen Ausführungsbeispiels einer erfindungsgemäßen Vorrichtung 1 einen Formschluss einzugehen. Hierbei werden auch elektrische Leitungen sowie eine Datenleitung kontaktiert, welche einerseits über eine in einer Docking-Station 14 angeordnete Energieverarbeitungseinheit 15 und einen Netzstecker 16 mit elektrischer Energie versorgt, andererseits mit einem Laptop 17 als externen Datenspeicher verbunden sind. Selbstverständlich können die Merkmale und Merkmalskombinationen der in Figur 2 dargestellten Vorrichtung 1 vollständig auf die in Figur 3 dargestellte Vorrichtung 1 übertragen beziehungsweise mit der dort gezeigten Vorrichtung 1 kombiniert werden, ohne den Bereich der vorliegenden Erfindung zu verlassen.

## Patentansprüche

1. Vorrichtung (1) zur betriebskenngrößenabhängigen Aktivierung einer Funktion eines Peripheriegerätes (2) umfassend
- eine Erfassungseinheit (7) für die Erfassung einer Betriebskenngröße eines Fortbewegungsmittels (10),
- eine Sendeeinheit, insbesondere eine Drahtlossendeeinheit (4) zum Aussenden eines Aktivierungssignals an das Peripheriegerät (2) in Abhängigkeit des Vergleichs der Betriebskenngröße mit einem Schwellenwert,
**gekennzeichnet durch**
- eine Schwellwerteinheit, insbesondere einen Konfigurationseingang (5a, 5b), zum Definieren des Schwellenwertes für die Betriebskenngröße.

2. Vorrichtung nach Anspruch 1, wobei die Erfassungseinheit (7)
- eine zur satellitenbasierten Positionsbestimmung eingerichtete Ortungseinheit, und/oder
- einen Radumdrehungssensor, und/oder
- einen Beschleunigungssensor, und/oder
- einen Bus-Controller
umfasst.

3. Vorrichtung nach einem der vorstehenden Ansprüche, wobei die Schwellwerteinheit (5a, 5b)
- eine kurzstreckenfunk-basierte Drahtlossendeempfangseinheit, insbesondere in Übereinstimmung mit Bluetooth, und/oder
- einen USB-Eingang oder
- einen Datenspeicher umfasst.

4. Vorrichtung nach einem der vorstehenden Ansprüche, wobei die Betriebskenngröße eine Geschwindigkeit und/oder eine Beschleunigung ist und der Schwellenwert insbesondere ein jeweiliger Minimalwert, Maximalwert oder Durchschnittswert repräsentiert.

5. Vorrichtung nach einem der vorstehenden Ansprüche, wobei die Vorrichtung (1) weiter eingerichtet ist, eine vordefinierbare Zeitdauer bis zur Durchführung des Vergleichs und/oder zur Aussendung des Aktivierungssignals abzuwarten.

6. Fortbewegungsmittel, insbesondere Zweirad, bevorzugt elektrisch antreibbares Fahrrad, umfassend eine Vorrichtung (1) nach einem der vorstehenden Ansprüche.

7. System umfassend
- eine Bildaufzeichnungseinrichtung (2), insbesondere für den Außeneinsatz mit einer Drahtlosempfangseinheit zum Empfangen des Aktivierungssignals, und
- eine Vorrichtung (1) nach einem der Ansprüche 1 bis 5.

## Claims

1. Apparatus (1) for activating a function of a peripheral device (2) on the basis of an operating characteristic variable, comprising
- an acquisition unit (7) for acquiring an operating characteristic variable of a means of transport (10),
- a transmitting unit, in particular a wireless transmitting unit (4), for emitting an activation signal to the peripheral device (2) on the basis of the comparison of the operating characteristic variable with a threshold value,
**characterized by**
- a threshold value unit, in particular a configuration input (5a, 5b), for defining the threshold value for the operating characteristic variable.

2. Apparatus according to Claim 1, the acquisition unit (7) comprising
- a position-finding unit set up for satellite-based position determination, and/or
- a wheel revolution sensor, and/or
- an acceleration sensor, and/or
- a bus controller.

3. Apparatus according to one of the preceding claims, the threshold value unit (5a, 5b) comprising
- a wireless transceiving unit based on short distance radio, in particular in accordance with Bluetooth, and/or
- a USB input, or
- a data memory.

4. Apparatus according to one of the preceding claims, the operating characteristic variable being a speed and/or an acceleration, and the threshold value representing, in particular, a respective minimum value, maximum value or average value.

5. Apparatus according to one of the preceding claims, apparatus (1) also being set up to wait for a predefinable period before carrying out the comparison and/or emitting the activation signal.

6. Means of transport, in particular a two-wheeled vehicle, preferably an electrically driveable bicycle, comprising an apparatus (1) according to one of the preceding claims.

7. System comprising
- an image recording device (2), in particular for outdoor use, having a wireless receiving unit for receiving the activation signal, and
- an apparatus (1) according to one of Claims 1 to 5.

## Revendications

1. Dispositif (1) destiné à activer une fonction d'un appareil périphérique (2) en fonction de grandeurs caractéristiques de fonctionnement, comprenant
- une unité de détection (7) destinée à détecter une grandeur caractéristique de fonctionnement d'un moyen de déplacement (10),
- une unité d'émission, notamment une unité d'émission sans fil (4), destinée à émettre un signal d'activation vers l'appareil périphérique (2) en fonction de la comparaison de la grandeur caractéristique de fonctionnement à une valeur de seuil,
**caractérisé par**
- une unité de définition de valeur de seuil, notamment une entrée de configuration (5a, 5b), destinée à définir la valeur de seuil de la grandeur caractéristique de fonctionnement.

2. Dispositif selon la revendication 1, dans lequel l'unité de détection (7) comprend
- une unité de localisation conçue pour déterminer une position par satellite, et/ou
- un capteur de rotation de roue, et/ou
- un capteur d'accélération, et/ou
- un contrôleur de bus.

3. Dispositif selon l'une quelconque des revendications précédentes, dans lequel l'unité de définition de seuil (5a, 5b) comprend
- une unité d'émission-réception sans fil à base de radio de courte portée, notamment conforme à la norme Bluetooth, et/ou
- une entrée USB ou
- une mémoire de données.

4. Dispositif selon l'une quelconque des revendications précédentes, dans lequel la grandeur caractéristique de fonctionnement est une vitesse et/ou une accélération, et dans lequel la valeur de seuil représente notamment respectivement une valeur minimale, une valeur maximale ou une valeur moyenne.

5. Dispositif selon l'une quelconque des revendications précédentes, dans lequel le dispositif (1) est en outre conçu pour attendre pendant un temps pouvant être prédéfini l'exécution de la comparaison et/ou l'émission du signal d'activation.

6. Moyen de déplacement, notamment à deux roues, et de préférence, bicyclette pouvant être entraînée électriquement, comprenant un dispositif (1) selon l'une quelconque des revendications précédentes.

7. Système comprenant
- un équipement d'acquisition d'image (2), notamment destiné à être utilisé en extérieur, comportant une unité de réception sans fil destinée à recevoir le signal d'activation, et
- un dispositif (1) selon l'une quelconque des revendications 1 à 5.
